# FASCICULE DE BREVET EUROPEEN

(11) **EP 4 371 450 B1**
(45) Date de publication et mention de la délivrance du brevet: **22.04.2026**
(21) Numéro de dépôt: 23209910.1
(22) Date de dépôt: 14.11.2023
(51) Int. Cl.: A47J 37/06, F24C 15/14, F24C 15/16

(54) **APPAREIL DE CUISSON COMPRENANT UN DISPOSITIF DE COLLECTE CONFIGURE POUR COLLECTER DES JUS DE CUISSON ET DES CONDENSATS**
GARGERÄT MIT EINER SAMMELVORRICHTUNG, DIE ZUM SAMMELN VON KOCHSÄFTEN UND KONDENSAT KONFIGURIERT IST
COOKING APPLIANCE COMPRISING A COLLECTION DEVICE CONFIGURED TO COLLECT COOKING JUICE AND CONDENSATES

(30) Priorité: 17.11.2022 FR 2211942
(43) Date de publication de la demande: 22.05.2024
(73) Titulaire: SEB S.A., 69130 Ecully (FR)
(72) Inventeur: DUSSART, Marie, 69134 Ecully Cedex (FR); PETITALLOT, Johann, 69134 Ecully Cedex (FR)
(74) Mandataire: SEB Développement

(56) Documents cités:
- WO-A1-2011/099312
- CN-U- 211 911 385
- DE-A1- 102008 014 590
- DE-U1- 20 005 961
- DE-U1- 202018 104 930
- FR-A1- 2 011 042
- KR-A- 20130 017 201

## Description

### Domaine technique

La présente invention concerne de manière générale un appareil de cuisson pour la cuisson de produits alimentaires, et en particulier un appareil de multi-cuisson de type four utilisant au moins la fonction de gril viande et/ou la fonction de cuisson vapeur.

### Etat de la technique

Il est connu de l'art antérieur d'utiliser un appareil de cuisson électrique de type four afin de réaliser la cuisson d'aliments selon plusieurs modes de cuisson. Une plaque de récupération, telle qu'une lèchefrite par exemple, est généralement présente en dessous des aliments à cuire, qui peuvent par exemple être disposés sur une grille de cuisson, afin de collecter par gravité les jus provenant de la cuisson des aliments.

Il existe également d'autres alternatives techniques afin de collecter les jus et liquides provenant de la cuisson des aliments ; l'utilisation d'un récipient de cuisson faisant office de réservoir de collecte ou l'utilisation d'un contenant partiellement étanche pour une cuisson vapeur en sont l'exemple.

Cependant, les appareils de cuisson décrits précédemment présentent certains inconvénients.

En effet, lors de l'utilisation d'une lèchefrite et en cours de cuisson des aliments, les jus de cuisson tombent par gravité depuis l'aliment à cuire à l'intérieur de la lèchefrite. En revanche, lorsque l'utilisateur manipule l'aliment à cuire en dehors ou partiellement en dehors de l'espace interne du four, par exemple en ayant déplacé partiellement la grille de cuisson supportant les aliments en dehors du four, les jus de cuisson continuent à s'écouler depuis l'aliment à cuire et tombent notamment sur la porte du four.

En outre, l'utilisation d'un récipient de cuisson configuré pour recevoir l'aliment à cuire présente l'inconvénient majeur de maintenir un contact entre l'aliment à cuire et les jus de cuisson. En effet, les jus de cuisson vont former un bain au fond du récipient de cuisson dans lequel repose l'aliment à cuire, ce qui peut altérer la cuisson ainsi que les qualités organoleptiques de l'aliment à cuire.

Le document FR 2 011 042 A1 divulgue une cuisinière pourvue d'une cuvette amovible de récupération des écoulements de cuisson.

Le document KR 2013 0017201 A divulgue un four à micro-ondes pourvu d'une plaque de cuisson et d'un tiroir de récupération des liquides générés par les aliments cuits dans une chambre de cuisson.

Le document CN 211 911 385 U divulgue un four à air chaud avec une plaque de cuisson comprenant un bac à huile, et un dispositif coulissant.

### Résumé de l'invention

Le problème technique à la base de l'invention consiste notamment à fournir un appareil de cuisson qui soit ergonomique et simple d'utilisation et qui permette la cuisson de produits alimentaires dans une configuration gril mais également dans une configuration cuisson vapeur, tout en évitant que les produits alimentaires ne baignent dans les jus de cuisson et / ou les condensats durant l'étape de cuisson.

A cet effet, la présente invention concerne un appareil de cuisson configuré pour la cuisson d'aliments, l'appareil de cuisson comportant une chambre de cuisson, une plaque de cuisson déplaçable selon une direction de déplacement entre une première position de plaque dans laquelle la plaque de cuisson est entièrement située dans la chambre de cuisson et une deuxième position de plaque dans laquelle la plaque de cuisson est en butée d'un mouvement de retrait correspondant à la position dans laquelle la plaque de cuisson est en butée de mouvement lorsque l'utilisateur retire la plaque de cuisson de la chambre de cuisson selon la direction de déplacement, et située au moins en partie à l'extérieur de la chambre de cuisson, la plaque de cuisson comportant une partie de fond et des parois périphériques délimitant un volume interne, l'appareil de cuisson comportant en outre un dispositif de collecte configuré pour collecter des jus de cuisson provenant d'aliments situés sur la plaque de cuisson, le dispositif de collecte comprenant un bac de collecte situé en dessous de la plaque de cuisson, la plaque de cuisson comportant un orifice d'évacuation débouchant dans le volume interne et situé à l'aplomb du bac de collecte, l'orifice d'évacuation étant configuré pour permettre un écoulement par gravité des jus de cuisson, contenus dans le volume interne, dans le bac de collecte quelle que soit la position occupée par la plaque de cuisson caractérisé en ce que l'appareil de cuisson comporte en outre un élément de séparation fixe disposé entre le bac de collecte et la plaque de cuisson lorsque la plaque de cuisson est dans la première position de plaque, l'élément de séparation comportant une fente de passage configurée pour autoriser un écoulement gravitaire des jus de cuisson depuis l'orifice d'évacuation et en direction du bac de collecte quelle que soit la position occupée par la plaque de cuisson.

Une telle configuration de la plaque de cuisson assure une évacuation des jus de cuissons provenant des aliments situés sur la plaque de cuisson en direction du dispositif de collecte, et plus précisément, jusqu'au bac de collecte. Par conséquent, les aliments ne baignent pas dans les jus de cuisson durant la cuisson.

En outre, la configuration spécifique du dispositif de collecte permet de récupérer les jus de cuisson provenant de la plaque de cuisson quelle que soit la position occupée par la plaque de cuisson. Cela permet d'éviter que les jus de cuisson ne s'écoulent de façon incontrôlée, par exemple sur une porte de l'appareil de cuisson, lorsque l'utilisateur déplace la plaque de cuisson dans la deuxième position de plaque, pour vérifier la cuisson des aliments par exemple.

L'appareil de cuisson peut en outre présenter une ou plusieurs des caractéristiques suivantes, qui peuvent être prises seules ou en combinaison.

Selon un mode de réalisation de l'invention, la plaque de cuisson est montée coulissante par rapport à un bâti de l'appareil de cuisson. Plus particulièrement, la plaque de cuisson est montée coulissante entre la première position de plaque et la deuxième position de plaque selon la direction de déplacement.

Selon un mode de réalisation de l'invention, la partie de fond de la plaque de cuisson comporte au moins une surface de guidage inclinée qui est configurée pour guider et orienter des jus de cuisson contenus dans le volume interne en direction de l'orifice d'évacuation.

Selon un mode de réalisation de l'invention, l'au moins une surface de guidage inclinée est configurée pour être inclinée par rapport à l'horizontale d'un angle d'inclinaison compris entre 0° et 1°, et avantageusement entre 0,1° et 0,6°, et par exemple d'environ 0,3°, lorsque l'appareil de cuisson repose sur une surface horizontale.

Selon un mode de réalisation de l'invention, l'orifice d'évacuation est prévu sur une paroi périphérique de la plaque de cuisson qui s'étend sensiblement parallèlement à la direction de déplacement
Selon un mode de réalisation de l'invention, l'au moins une surface de guidage inclinée est configurée pour être inclinée par rapport à l'horizontale autour d'un axe transverse à la direction de déplacement.

Selon un mode de réalisation de l'invention, la plaque de cuisson comporte des nervures de support prévues sur la partie de fond et configurées pour supporter des aliments disposés sur la plaque de cuisson.

Selon un mode de réalisation de l'invention, les nervures de support s'étendent sensiblement transversalement à la direction de déplacement.

Selon un mode de réalisation de l'invention, les nervures de support délimitent des canaux d'écoulement de jus de cuisson configurés pour guider et orienter au moins une partie des jus de cuisson contenus dans le volume interne en direction de l'orifice d'évacuation.

Selon un mode de réalisation de l'invention, les canaux d'écoulement de jus de cuisson s'étendent transversalement, et par exemple perpendiculairement, à la direction de déplacement.

Selon un mode de réalisation de l'invention, les canaux d'écoulement de jus de cuisson sont configurés pour guider et orienter les jus de cuisson contenus dans le volume interne en direction de la paroi périphérique de la plaque de cuisson qui est pourvue de l'orifice d'évacuation.

Selon un mode de réalisation de l'invention, la plaque de cuisson comporte en outre un canal de collecte latéral configuré pour collecter des jus de cuisson s'écoulant dans les canaux d'écoulement de jus de cuisson et pour guider et orienter lesdits jus de cuisson en direction de l'orifice d'évacuation.

Selon un mode de réalisation de l'invention, chaque canal d'écoulement de jus de cuisson comporte une paroi de fond pourvue d'une surface de guidage inclinée configurée pour guider et orienter des jus de cuisson contenus dans ledit canal d'écoulement de jus de cuisson en direction du canal de collecte latéral.

Selon un mode de réalisation de l'invention, le canal de collecte latéral comporte une paroi de fond qui est inclinée et qui est configurée pour guider et orienter les jus de cuisson contenus dans le canal de collecte latéral en direction de l'orifice d'évacuation.

Selon un mode de réalisation de l'invention, le canal de collecte latéral s'étend le long de la paroi périphérique de la plaque de cuisson qui est pourvue de l'orifice d'évacuation.

Selon un mode de réalisation de l'invention, l'orifice d'évacuation est situé au point le plus bas du volume interne lorsque l'appareil de cuisson repose sur une surface qui est horizontale.

Selon un mode de réalisation de l'invention, la direction de déplacement est sensiblement horizontale lorsque l'appareil de cuisson repose sur une surface qui est horizontale.

Selon un mode de réalisation de l'invention, le canal de collecte latéral s'étend parallèlement à la direction de déplacement.

Selon un mode de réalisation de l'invention, la chambre de cuisson comporte une ouverture d'accès, et l'appareil de cuisson comporte une porte mobile entre une position de fermeture dans laquelle la porte ferme l'ouverture d'accès et empêche l'accès à la plaque de cuisson, et une position d'ouverture dans laquelle la porte libère l'ouverture d'accès et autorise un déplacement de la plaque de cuisson entre la première position de plaque et la deuxième position de plaque.

Selon un mode de réalisation de l'invention, la porte est montée pivotante autour d'un axe de pivotement qui est sensiblement horizontal lorsque l'appareil de cuisson repose sur une surface qui est horizontale.

Selon un mode de réalisation de l'invention, l'axe de pivotement de la porte s'étend sensiblement perpendiculairement à la direction de déplacement.

Selon un mode de réalisation de l'invention, l'élément de séparation forme le fond de la chambre de cuisson.

Selon un mode de réalisation de l'invention, la fente de passage s'étend selon une direction d'extension qui est sensiblement parallèle à la direction de déplacement, de telle sorte que l'orifice d'évacuation est situé à l'aplomb de la fente de passage quelle que soit la position occupée par la plaque de cuisson.

Selon un mode de réalisation de l'invention, l'élément de séparation délimite un volume de récupération configuré pour collecter au moins une partie des condensats s'écoulant sur des parois internes de la chambre de cuisson.

Selon un mode de réalisation de l'invention, l'élément de séparation comporte des surfaces de guidage périphériques s'étendant sur le pourtour du volume de récupération, les surfaces de guidage périphériques étant configurées pour guider et orienter au moins une partie des condensats s'écoulant sur les parois internes de la chambre de cuisson vers le volume de récupération.

Selon un mode de réalisation de l'invention, chaque surface de guidage périphérique est configurée pour être inclinée par rapport à l'horizontale lorsque l'appareil de cuisson repose sur une surface horizontale.

Selon un mode de réalisation de l'invention, le volume de récupération comporte une paroi de fond qui s'étend au moins en partie en regard du bac de collecte, la paroi de fond comportant un orifice d'écoulement configuré pour permettre un écoulement par gravité des condensats, contenus dans le volume de récupération, dans le bac de collecte.

Selon un mode de réalisation de l'invention, l'orifice d'écoulement est prévu au point le plus bas de la paroi de fond du volume de récupération.

Selon un mode de réalisation de l'invention, l'appareil de cuisson comporte en outre un élément chauffant disposé entre l'élément de séparation et la plaque de cuisson lorsque la plaque de cuisson occupe la première position de plaque. Avantageusement, l'élément de séparation fonctionne comme un bouclier thermique ; la présence de l'élément de séparation permet d'empêcher que les jus tombant dans le bac de collecte ne s'évaporent et ne brulent sous l'effet de la chaleur.

Selon un mode de réalisation de l'invention, la chambre de cuisson comporte deux éléments de déviation prévus respectivement sur deux parois latérales de la chambre de cuisson, chaque élément de déviation étant configuré pour s'étendre au moins en partie au-dessus de la plaque de cuisson et pour guider et orienter les condensats s'écoulant sur la paroi latérale respective de la chambre de cuisson en direction de la plaque de cuisson.

Selon un mode de réalisation de l'invention, chaque élément de déviation est configuré pour permettre un écoulement par gravité des condensats, s'écoulant sur ledit élément de déviation, sur la plaque de cuisson.

Selon un mode de réalisation de l'invention, chaque élément de déviation est formé par une excroissance de déviation prévue sur la paroi latérale respective de la chambre de cuisson.

Selon un mode de réalisation de l'invention, la plaque de cuisson comporte en outre deux rebords latéraux s'étendant sensiblement parallèlement à la direction de déplacement, chaque élément de déviation étant configuré pour s'étendre au moins en partie au-dessus d'un rebord latéral respectif et pour permettre un écoulement par gravité des condensats, s'écoulant sur ledit élément de déviation, sur le rebord latéral respectif.

Selon un mode de réalisation de l'invention, chaque rebord latéral de la plaque de cuisson est configuré pour être incliné par rapport à l'horizontale lorsque l'appareil de cuisson repose sur une surface horizontale.

Selon un mode de réalisation de l'invention, chaque élément de déviation comporte une face d'écoulement qui est sensiblement verticale et qui est située au-dessus et à l'aplomb du rebord latéral respectif de la plaque de cuisson. Selon un mode de réalisation de l'invention, chaque élément de déviation est allongé et s'étend sensiblement parallèlement à la direction de déplacement. Selon un mode de réalisation de l'invention, chaque élément de déviation est configuré pour s'étendre sensiblement horizontalement lorsque l'appareil de cuisson repose sur une surface horizontale.

Selon un mode de réalisation de l'invention, chaque élément de déviation est configuré pour s'étendre sur toute la longueur de la plaque de cuisson lorsque la plaque de cuisson occupe la première position de plaque. On entend par « longueur de la plaque de cuisson » la dimension de la plaque de cuisson mesurée selon la direction de déplacement.

Un mode de réalisation non revendiqué concerne en outre un appareil de cuisson configuré pour la cuisson d'aliments, l'appareil de cuisson comportant une chambre de cuisson et une plaque de cuisson située dans la chambre de cuisson, caractérisé en ce que la chambre de cuisson comporte deux éléments de déviation prévus respectivement sur deux parois latérales de la chambre de cuisson, chaque élément de déviation étant configuré pour s'étendre au moins en partie au-dessus de la plaque de cuisson et pour guider et orienter des condensats s'écoulant sur la paroi latérale respective de la chambre de cuisson en direction de la plaque de cuisson.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue partielle en perspective avant d'un appareil de cuisson selon la présente invention, dans laquelle une plaque de cuisson occupe une première position de plaque ;
[Fig 2] est une vue partielle en perspective avant de l'appareil de cuisson de la figure 1, dans laquelle la plaque de cuisson occupe une deuxième position de plaque ;
[Fig 3] est une vue partielle en coupe de l'appareil de cuisson de la figure 1 ;
[Fig 4] est une vue partielle de côté de l'appareil de cuisson de la figure 1, montrant la plaque de cuisson occupant la première position de plaque ;
[Fig 5] est une vue partielle de côté de l'appareil de cuisson de la figure 1, montrant la plaque de cuisson occupant la deuxième position de plaque ;
[Fig 6] est une vue partielle en coupe de l'appareil de cuisson de la figure 1 ;
[Fig 7] est une vue partielle en perspective de dessus de l'appareil de cuisson de la figure 1 montrant un élément chauffant de l'appareil de cuisson.

### Description détaillée

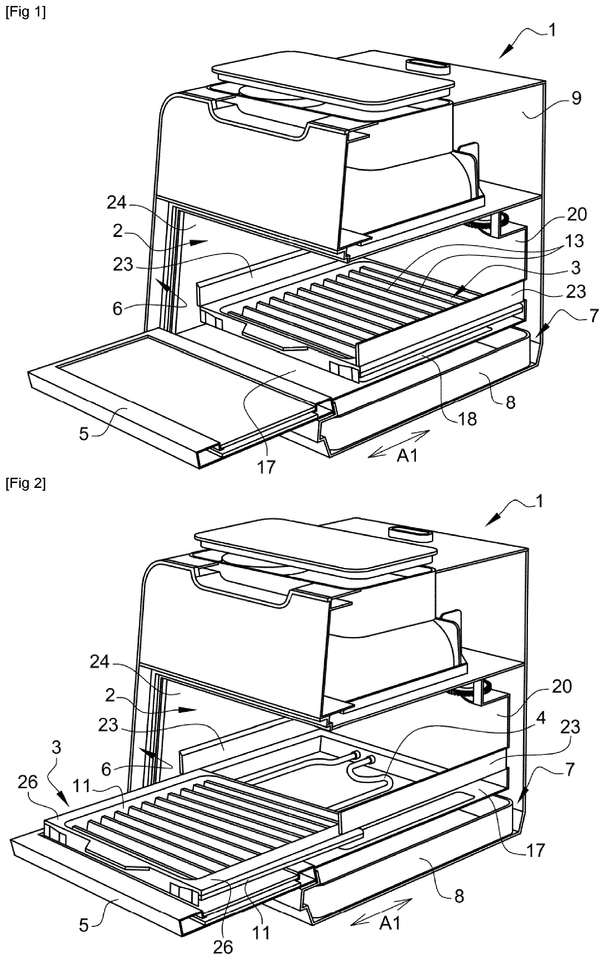

Les figures 1 à 7 représentent un appareil de cuisson 1 selon un mode de réalisation de l'invention. L'appareil de cuisson 1 est configuré pour la cuisson d'aliments, tel que de la viande, du poisson, des légumes ou d'autres produits alimentaires.

L'appareil de cuisson 1 comporte notamment une chambre de cuisson 2, une plaque de cuisson 3, un élément chauffant 4, et une porte 5 configurée pour fermer une ouverture d'accès 6 de la chambre de cuisson 2. L'appareil de cuisson 1 comporte en outre un dispositif de collecte 7 configuré pour collecter des jus de cuisson provenant d'aliments situés sur la plaque de cuisson 3. Le dispositif de collecte 7 comprend entre autre un bac de collecte 8 situé en dessous de la plaque de cuisson 3.

La plaque de cuisson 3 est plus particulièrement montée coulissante par rapport à un bâti 9 de l'appareil de cuisson 1 selon une direction de déplacement A1, entre une première position de plaque dans laquelle la plaque de cuisson 3 est entièrement située dans la chambre de cuisson 2, et une deuxième position de plaque dans laquelle la plaque de cuisson 3 est en butée d'un mouvement de retrait et située au moins en partie à l'extérieur de la chambre de cuisson 2. De façon avantageuse, la direction de déplacement A1 est sensiblement horizontale lorsque l'appareil de cuisson 1 repose sur une surface qui est horizontale.

La porte 5 de l'appareil de cuisson 1 est mobile entre une position de fermeture dans laquelle la porte 5 ferme l'ouverture d'accès 6 et empêche l'accès à la plaque de cuisson 3, et une position d'ouverture dans laquelle la porte 5 libère l'ouverture d'accès 6 et autorise un déplacement de la plaque de cuisson 3 entre la première position de plaque et la deuxième position de plaque. La porte 5 est par exemple montée pivotante autour d'un axe de pivotement qui s'étend sensiblement perpendiculairement à la direction de déplacement A1 et qui est sensiblement horizontal lorsque l'appareil de cuisson 1 repose sur une surface qui est horizontale.

La plaque de cuisson 3 comporte une partie de fond 10 et des parois périphériques 11 qui délimitent un volume interne 12. La plaque de cuisson 3 comporte en outre des nervures de support 13 prévues sur la partie de fond 10 et configurées pour supporter des aliments disposés sur la plaque de cuisson 3. De façon avantageuse, les nervures de support 13 s'étendent transversalement, et par exemple perpendiculairement, à la direction de déplacement A1, et délimitent des canaux d'écoulement de jus de cuisson.

La plaque de cuisson 3 comporte en outre un orifice d'évacuation 14 qui débouche dans le volume interne 12 et qui est situé à l'aplomb du bac de collecte 8. L'orifice d'évacuation 14 est configuré pour permettre un écoulement par gravité des jus de cuisson, contenus dans le volume interne 12, dans le bac de collecte 8 quelle que soit la position occupée par la plaque de cuisson 3.

Selon le mode de réalisation représenté sur les figures, l'orifice d'évacuation 14 est prévu sur une paroi périphérique 11 de la plaque de cuisson 3 qui s'étend sensiblement parallèlement à la direction de déplacement A1. Avantageusement, et afin de collecter de façon optimale les jus de cuisson, l'orifice d'évacuation 14 est situé au point le plus bas du volume interne 12 lorsque l'appareil de cuisson 1 repose sur une surface qui est horizontale.

Chaque canal d'écoulement de jus de cuisson comporte plus particulièrement une paroi de fond qui est formée par la partie de fond 10 de la plaque de cuisson 3 et qui est pourvue d'une surface de guidage inclinée 15 configurée pour guider et orienter des jus de cuisson contenus dans ledit canal d'écoulement de jus de cuisson en direction de la paroi périphérique 11 de la plaque de cuisson 3 qui est pourvue de l'orifice d'évacuation 14.

De façon avantageuse, chaque surface de guidage inclinée 15 est configurée pour être inclinée par rapport à l'horizontale d'un angle d'inclinaison compris entre 0° et 1°, et avantageusement entre 0,1° et 0,6°, et par exemple d'environ 0,3°, lorsque l'appareil de cuisson 1 repose sur une surface horizontale. Chaque surface de guidage inclinée 15 est plus particulièrement configurée pour être inclinée par rapport à l'horizontale autour d'un axe transverse à la direction de déplacement A1.

La plaque de cuisson 3 comporte en outre un canal de collecte latéral 16 configuré pour collecter des jus de cuisson s'écoulant dans les canaux d'écoulement de jus de cuisson et pour guider et orienter lesdits jus de cuisson en direction de l'orifice d'évacuation 14. Le canal de collecte latéral 16 s'étend le long de la paroi périphérique 11 de la plaque de cuisson 3 qui est pourvue de l'orifice d'évacuation 14, et parallèlement à la direction de déplacement A1. De façon avantageuse, la surface de guidage inclinée 15 de chaque canal d'écoulement de jus de cuisson est configurée pour guider et orienter des jus de cuisson contenus dans ledit canal d'écoulement de jus de cuisson en direction du canal de collecte latéral 16.

Le canal de collecte latéral 16 comporte une paroi de fond qui est configurée pour être inclinée par rapport à l'horizontale et qui est configurée pour guider et orienter les jus de cuisson contenus dans le canal de collecte latéral 16 en direction de l'orifice d'évacuation 14.

Selon le mode de réalisation représenté sur les figures, l'appareil de cuisson 1 comporte en outre un élément de séparation 17 qui est fixe et qui est disposé entre le bac de collecte 8 et la plaque de cuisson 3 lorsque la plaque de cuisson 3 est dans la première position de plaque. De façon avantageuse, l'élément chauffant 4 est disposé entre l'élément de séparation 17 et la plaque de cuisson 3 lorsque la plaque de cuisson 3 occupe la première position de plaque. Ainsi, l'élément de séparation 17 fonctionne comme un bouclier thermique, et empêche que les jus tombant dans le bac de collecte 8 ne s'évaporent et ne brulent sous l'effet de la chaleur.

L'élément de séparation 17 comporte une fente de passage 18 qui s'étend selon une direction d'extension qui est sensiblement parallèle à la direction de déplacement A1 et qui est configurée pour autoriser un écoulement gravitaire des jus de cuisson depuis l'orifice d'évacuation 14 et en direction du bac de collecte 8 quelle que soit la position occupée par la plaque de cuisson 3.

Selon le mode de réalisation représenté sur les figures, l'élément de séparation 17 forme le fond de la chambre de cuisson 2 et délimite un volume de récupération 19 configuré pour collecter au moins une partie des condensats s'écoulant sur des parois internes 20 de la chambre de cuisson 2. De façon avantageuse, l'élément de séparation 17 comporte des surfaces de guidage périphériques 21 s'étendant sur le pourtour du volume de récupération 19. Les surfaces de guidage périphériques 21 sont configurées pour guider et orienter au moins une partie des condensats s'écoulant sur les parois internes 20 de la chambre de cuisson 2 vers le volume de récupération 19. A cet effet, chaque surface de guidage périphérique 21 est configurée pour être inclinée par rapport à l'horizontale lorsque l'appareil de cuisson 1 repose sur une surface horizontale.

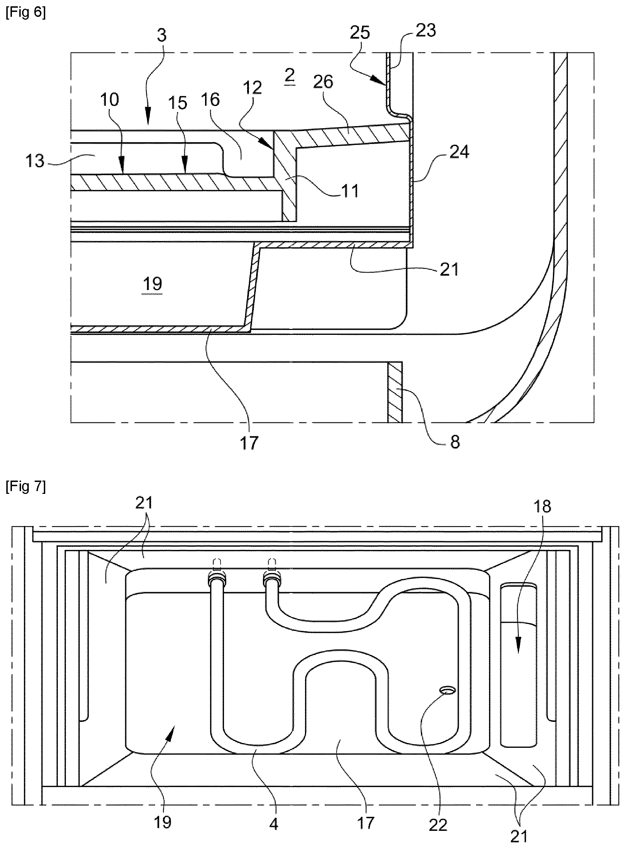

Le volume de récupération 19 comporte une paroi de fond qui s'étend en partie en regard du bac de collecte 8. La paroi de fond comporte un orifice d'écoulement 22 (voir la figure 7) qui est configuré pour permettre un écoulement par gravité des condensats, contenus dans le volume de récupération 19, dans le bac de collecte 8. De façon avantageuse, l'orifice d'écoulement 22 est prévu au point le plus bas de la paroi de fond du volume de récupération 19.

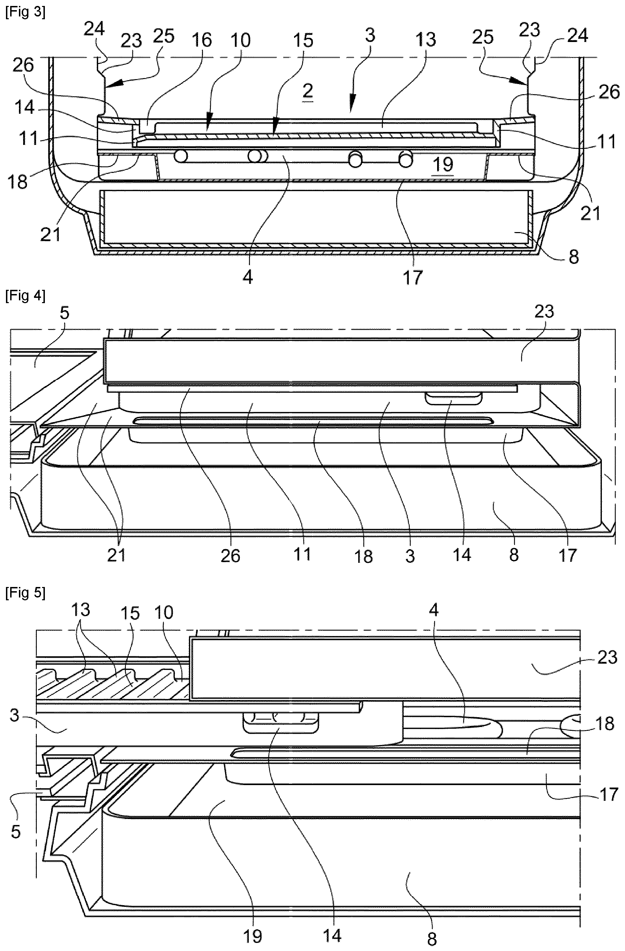

Comme visible plus spécifiquement sur les figures 2 et 3, la chambre de cuisson 2 comporte deux éléments de déviation 23 prévus respectivement sur deux parois latérales 24 de la chambre de cuisson 2. Chaque élément de déviation 23 est configuré pour s'étendre au moins en partie au-dessus de la plaque de cuisson 3 et pour guider et orienter les condensats s'écoulant sur la paroi latérale 24 respective de la chambre de cuisson 2 en direction de la plaque de cuisson 3.

Selon le mode de réalisation représenté sur les figures, chaque élément de déviation 23 est formé par une excroissance de déviation prévu sur la paroi latérale 24 respective de la chambre de cuisson 2. De façon avantageuse, chaque élément de déviation 23 est allongé et s'étend sensiblement parallèlement à la direction de déplacement A1, et donc sensiblement horizontalement lorsque l'appareil de cuisson repose sur une surface horizontale. Chaque élément de déviation 23 peut par exemple être configuré pour s'étendre sur toute la longueur de la plaque de cuisson 3 lorsque cette dernière occupe la première position de plaque. De façon avantageuse, chaque élément de déviation 23 comporte une face d'écoulement 25 qui est sensiblement verticale.

La plaque de cuisson 3 comporte en outre deux rebords latéraux 26 qui s'étendent sensiblement parallèlement à la direction de déplacement A1. Chaque élément de déviation 23 est configuré pour s'étendre en partie au-dessus d'un rebord latéral 26 respectif et pour permettre un écoulement par gravité des condensats, s'écoulant sur ledit élément de déviation 23, sur le rebord latéral 26 respectif. De façon avantageuse, les rebords latéraux 26 de la plaque de cuisson 3 sont configurés pour être inclinés par rapport à l'horizontale lorsque l'appareil de cuisson 1 repose sur une surface horizontale.

## Revendications

1. Appareil de cuisson (1) configuré pour la cuisson d'aliments, l'appareil de cuisson (1) comportant une chambre de cuisson (2), une plaque de cuisson (3) déplaçable selon une direction de déplacement (A1) entre une première position de plaque dans laquelle la plaque de cuisson (3) est entièrement située dans la chambre de cuisson (2) et une deuxième position de plaque dans laquelle la plaque de cuisson (3) est en butée d'un mouvement de retrait correspondant à la position dans laquelle la plaque de cuisson est en butée de mouvement lorsque l'utilisateur retire la plaque de cuisson de la chambre de cuisson selon la direction de déplacement, et située au moins en partie à l'extérieur de la chambre de cuisson (2), la plaque de cuisson (3) comportant une partie de fond (10) et des parois périphériques (11) délimitant un volume interne (12), l'appareil de cuisson (1) comportant en outre un dispositif de collecte (7) configuré pour collecter des jus de cuisson provenant d'aliments situés sur la plaque de cuisson (3), le dispositif de collecte (7) comprenant un bac de collecte (8) situé en dessous de la plaque de cuisson (3), la plaque de cuisson (3) comportant un orifice d'évacuation (14) débouchant dans le volume interne (12) et situé à l'aplomb du bac de collecte (8), l'orifice d'évacuation (14) étant configuré pour permettre un écoulement par gravité des jus de cuisson, contenus dans le volume interne (12), dans le bac de collecte (8) quelle que soit la position occupée par la plaque de cuisson (3), **caractérisé en ce que** l'appareil de cuisson (1) comporte en outre un élément de séparation (17) fixe disposé entre le bac de collecte (8) et la plaque de cuisson (3) lorsque la plaque de cuisson (3) est dans la première position de plaque, l'élément de séparation (17) comportant une fente de passage (18) configurée pour autoriser un écoulement gravitaire des jus de cuisson depuis l'orifice d'évacuation (14) et en direction du bac de collecte (8) quelle que soit la position occupée par la plaque de cuisson (3).

2. Appareil de cuisson (1) selon la revendication 1, dans lequel la partie de fond (10) de la plaque de cuisson (3) comporte au moins une surface de guidage inclinée (15) qui est configurée pour guider et orienter des jus de cuisson contenus dans le volume interne (12) en direction de l'orifice d'évacuation (14).

3. Appareil de cuisson (1) selon la revendication 1 ou 2, dans lequel l'orifice d'évacuation (14) est prévu sur une paroi périphérique (11) de la plaque de cuisson (3) qui s'étend sensiblement parallèlement à la direction de déplacement (A1).

4. Appareil de cuisson (1) selon l'une quelconque des revendications 1 à 3, dans lequel la plaque de cuisson (3) comporte des nervures de support (13) prévues sur la partie de fond (10) et configurées pour supporter des aliments disposés sur la plaque de cuisson (3).

5. Appareil de cuisson (1) selon la revendication précédente, dans lequel les nervures de support (13) délimitent des canaux d'écoulement de jus de cuisson configurés pour guider et orienter au moins une partie des jus de cuisson contenus dans le volume interne (12) en direction de l'orifice d'évacuation (14).

6. Appareil de cuisson (1) selon la revendication 5 en combinaison avec la revendication 3, dans lequel les canaux d'écoulement de jus de cuisson sont configurés pour guider et orienter les jus de cuisson contenus dans le volume interne (12) en direction de la paroi périphérique (11) de la plaque de cuisson (3) qui est pourvue de l'orifice d'évacuation (14).

7. Appareil de cuisson (1) selon la revendication 5 ou 6, dans lequel la plaque de cuisson (3) comporte en outre un canal de collecte latéral (16) configuré pour collecter des jus de cuisson s'écoulant dans les canaux d'écoulement de jus de cuisson et pour guider et orienter lesdits jus de cuisson en direction de l'orifice d'évacuation (14).

8. Appareil de cuisson (1) selon la revendication précédente, dans lequel chaque canal d'écoulement de jus de cuisson comporte une paroi de fond pourvue d'une surface de guidage inclinée (15) configurée pour guider et orienter des jus de cuisson contenus dans ledit canal d'écoulement de jus de cuisson en direction du canal de collecte latéral (16).

9. Appareil de cuisson (1) selon la revendication 7 ou 8, dans lequel le canal de collecte latéral (16) comporte une paroi de fond qui est inclinée et qui est configurée pour guider et orienter les jus de cuisson contenus dans le canal de collecte latéral (16) en direction de l'orifice d'évacuation (14).

10. Appareil de cuisson (1) selon l'une quelconque des revendication 1 à 9, dans lequel la direction de déplacement (A1) est sensiblement horizontale lorsque l'appareil de cuisson (1) repose sur une surface qui est horizontale.

11. Appareil de cuisson (1) selon l'une quelconque des revendication 1 à 10, dans lequel la chambre de cuisson (2) comporte une ouverture d'accès (6), et l'appareil de cuisson (1) comporte une porte (5) mobile entre une position de fermeture dans laquelle la porte (5) ferme l'ouverture d'accès (6) et empêche l'accès à la plaque de cuisson (3), et une position d'ouverture dans laquelle la porte (5) libère l'ouverture d'accès (6) et autorise un déplacement de la plaque de cuisson (3) entre la première position de plaque et la deuxième position de plaque .

12. Appareil de cuisson (1) selon l'une des revendications précédentes, dans lequel la fente de passage (18) s'étend selon une direction d'extension qui est sensiblement parallèle à la direction de déplacement (A1), de telle sorte que l'orifice d'évacuation (14) est situé à l'aplomb de la fente de passage (18) quelle que soit la position occupée par la plaque de cuisson (3).

13. Appareil de cuisson (1) selon l'une des revendications précédentes, dans lequel l'élément de séparation (17) délimite un volume de récupération (19) configuré pour collecter au moins une partie des condensats s'écoulant sur des parois internes (20) de la chambre de cuisson (2).

14. Appareil de cuisson (1) selon la revendication précédente, dans lequel le volume de récupération (19) comporte une paroi de fond qui s'étend au moins en partie en regard du bac de collecte (8), la paroi de fond comportant un orifice d'écoulement (22) configuré pour permettre un écoulement par gravité des condensats, contenus dans le volume de récupération (19), dans le bac de collecte (8).

15. Appareil de cuisson (1) selon l'une quelconque des revendications précédentes, dans lequel la chambre de cuisson (2) comporte deux éléments de déviation (23) prévus respectivement sur deux parois latérales (24) de la chambre de cuisson (2), chaque élément de déviation (23) étant configuré pour s'étendre au moins en partie au-dessus de la plaque de cuisson (3) et pour guider et orienter les condensats s'écoulant sur la paroi latérale respective de la chambre de cuisson (2) en direction de la plaque de cuisson (3).

16. Appareil de cuisson (1) selon la revendication précédente, dans lequel la plaque de cuisson (3) comporte en outre deux rebords latéraux (26) s'étendant sensiblement parallèlement à la direction de déplacement (A1), chaque élément de déviation (23) étant configuré pour s'étendre au moins en partie au-dessus d'un rebord latéral 26 respectif et pour permettre un écoulement par gravité des condensats, s'écoulant sur ledit élément de déviation (23), sur le rebord latéral (26) respectif.

## Patentansprüche

1. Kochgerät (1), das für das Kochen von Lebensmitteln konfiguriert ist, wobei das Kochgerät (1) eine Kochkammer (2) umfasst, eine Kochplatte (3), die entlang einer Bewegungsrichtung (A1) zwischen einer ersten Plattenposition, in welcher die Kochplatte (3) vollständig innerhalb der Kochkammer (2) platziert ist, und einer zweiten Plattenposition, in welcher die Kochplatte (3) an der Grenze einer Rückzugsbewegung ist, entsprechend der Position, in der die Kochplatte beim Herausziehen der Platte aus der Kochkammer in der Bewegungsrichtung anschlägt, zumindest teilweise außerhalb der Kochkammer (2) befindet, die Kochplatte (3) umfasst einen Bodenbereich (10) und Umfassungswände (11), die ein Innenvolumen (12) abgrenzen, das Kochgerät (1) umfasst ferner eine Sammelvorrichtung (7), die dazu konfiguriert ist, Kochsäfte von Lebensmitteln auf der Kochplatte (3) zu sammeln, die Sammelvorrichtung (7) umfasst eine Sammelwanne (8) unterhalb der Kochplatte (3), die Kochplatte (3) umfasst eine Abflussöffnung (14), die in das Innenvolumen (12) mündet und sich direkt über der Sammelwanne (8) befindet, die Abflussöffnung (14) ist konfiguriert, um einen Schwerkraftfluss der in dem Innenvolumen (12) enthaltenen Kochsäfte in die Sammelwanne (8) zu ermöglichen, unabhängig von der Position, die die Kochplatte (3) einnimmt, **dadurch gekennzeichnet, dass** das Kochgerät (1) ferner ein festes Trennelement (17) umfasst, welches zwischen der Sammelwanne (8) und der Kochplatte (3) angeordnet ist, wenn sich die Kochplatte (3) in der ersten Plattenposition befindet, wobei das Trennelement (17) einen Durchlassschlitz (18) umfasst, der dazu konfiguriert ist, einen Schwerkraftfluss der Kochsäfte von der Abflussöffnung (14) in Richtung der Sammelwanne (8) zu ermöglichen, unabhängig von der Position der Kochplatte (3).

2. Kochgerät (1) gemäß Anspruch 1, wobei der Bodenbereich (10) der Kochplatte (3) mindestens eine geneigte Führungsfläche (15) umfasst, die konfiguriert ist, um Kochsäfte, die im Innenvolumen (12) enthalten sind, zur Abflussöffnung (14) hin zu leiten und zu richten.

3. Kochgerät (1) gemäß Anspruch 1 oder 2, wobei die Abflussöffnung (14) auf einer Umfassungswand (11) der Kochplatte (3) vorgesehen ist, die sich im Wesentlichen parallel zur Bewegungsrichtung (A1) erstreckt.

4. Kochgerät (1) gemäß einem der Ansprüche 1 bis 3, wobei die Kochplatte (3) Tragschienen (13) umfasst, die auf dem Bodenbereich (10) vorgesehen sind und dafür konfiguriert sind, Lebensmittel zu tragen, die auf der Kochplatte (3) angeordnet sind.

5. Kochgerät (1) gemäß dem vorherigen Anspruch, wobei die Tragschienen (13) Abflusskanäle für Kochsäfte begrenzen, die konfiguriert sind, mindestens einen Teil der im Innenvolumen (12) enthaltenen Kochsäfte zur Abflussöffnung (14) zu leiten und zu richten.

6. Kochgerät (1) gemäß Anspruch 5 in Kombination mit Anspruch 3, wobei die Abflusskanäle für Kochsäfte so konfiguriert sind, dass sie die im Innenvolumen (12) enthaltenen Kochsäfte zur Umfassungswand (11) der Kochplatte (3) leiten und richten, die mit der Abflussöffnung (14) versehen ist.

7. Kochgerät (1) gemäß Anspruch 5 oder 6, wobei die Kochplatte (3) ferner einen seitlichen Sammelkanal (16) umfasst, der konfiguriert ist, Kochsäfte zu sammeln, die in den Abflusskanälen für Kochsäfte strömen, und diese Kochsäfte zur Abflussöffnung (14) zu leiten und zu richten.

8. Kochgerät (1) gemäß dem vorherigen Anspruch, wobei jeder Abflusskanal für Kochsäfte eine Bodenwand umfasst, die mit einer geneigten Führungsfläche (15) versehen ist und dazu konfiguriert ist, Kochsäfte, die in dem genannten Abflusskanal für Kochsäfte enthalten sind, zur seitlichen Sammelkanal (16) hin zu leiten und zu richten.

9. Kochgerät (1) gemäß Anspruch 7 oder 8, wobei der seitliche Sammelkanal (16) eine Bodenwand umfasst, die geneigt ist und konfiguriert ist, die im seitlichen Sammelkanal (16) enthaltenen Kochsäfte zur Abflussöffnung (14) zu leiten und zu richten.

10. Kochgerät (1) gemäß einem der Ansprüche 1 bis 9, wobei die Bewegungsrichtung (A1) im Wesentlichen horizontal ist, wenn das Kochgerät (1) auf einer horizontalen Fläche ruht.

11. Kochgerät (1) gemäß einem der Ansprüche 1 bis 10, wobei die Kochkammer (2) eine Zugangsöffnung (6) umfasst und das Kochgerät (1) eine Tür (5) umfasst, die beweglich ist zwischen einer Schließposition, in der die Tür (5) die Zugangsöffnung (6) verschließt und den Zugang zur Kochplatte (3) verhindert, und einer Offenposition, in der die Tür (5) die Zugangsöffnung (6) freigibt und eine Bewegung der Kochplatte (3) zwischen der ersten Plattenposition und der zweiten Plattenposition ermöglicht.

12. Kochgerät (1) gemäß einem der vorherigen Ansprüche, wobei sich der Durchlassschlitz (18) in einer Verlaufsrichtung erstreckt, die im Wesentlichen parallel zur Bewegungsrichtung (A1) ist, wodurch die Abflussöffnung (14) unabhängig von der Position der Kochplatte (3) direkt über dem Durchlassschlitz (18) liegt.

13. Kochgerät (1) gemäß einem der vorherigen Ansprüche, wobei das Trennelement (17) ein Auffangvolumen (19) abgrenzt, das konfiguriert ist, mindestens einen Teil der Kondensate zu sammeln, die an den Innenwänden (20) der Kochkammer (2) ablaufen.

14. Kochgerät (1) gemäß dem vorherigen Anspruch, wobei das Auffangvolumen (19) eine Bodenwand umfasst, die sich zumindest teilweise gegenüber der Sammelwanne (8) erstreckt, die Bodenwand eine Abflussöffnung (22) umfasst, die dazu konfiguriert ist, einen Schwerkraftfluss der im Auffangvolumen (19) enthaltenen Kondensate in die Sammelwanne (8) zu ermöglichen.

15. Kochgerät (1) gemäß einem der vorherigen Ansprüche, wobei die Kochkammer (2) zwei Ablenkungselemente (23) umfasst, die jeweils an zwei Seitenwänden (24) der Kochkammer (2) vorgesehen sind, wobei jedes Ablenkungselement (23) konfiguriert ist, sich zumindest teilweise über der Kochplatte (3) zu erstrecken und die an der jeweiligen Seitenwand der Kochkammer (2) abfließenden Kondensate zur Kochplatte (3) zu leiten und zu richten.

16. Kochgerät (1) gemäß dem vorherigen Anspruch, wobei die Kochplatte (3) ferner zwei seitliche Ränder (26) umfasst, die sich im Wesentlichen parallel zur Bewegungsrichtung (A1) erstrecken, wobei jedes Ablenkungselement (23) so konfiguriert ist, dass es sich zumindest teilweise über einem jeweiligen seitlichen Rand (26) erstreckt und einen Schwerkraftfluss der Kondensate ermöglicht, die am genannten Ablenkungselement (23) entlang laufen, auf den jeweiligen seitlichen Rand (26).

## Claims

1. Cooking appliance (1) configured for cooking food, the cooking appliance (1) comprising a cooking chamber (2), a cooking plate (3) movable along a direction of movement (A1) between a first plate position, in which the cooking plate (3) is entirely located within the cooking chamber (2), and a second plate position, in which the cooking plate (3) is at the limit of a withdrawal movement corresponding to the position where the cooking plate abuts against movement when the user pulls the cooking plate out of the cooking chamber along the direction of movement, at least partially located outside the cooking chamber (2), the cooking plate (3) comprising a bottom part (10) and peripheral walls (11) delimiting an internal volume (12), the cooking appliance (1) also comprising a collecting device (7) configured to collect cooking juices from food located on the cooking plate (3), the collecting device (7) comprising a collecting tray (8) located beneath the cooking plate (3), the cooking plate (3) comprising a drainage orifice (14) opening into the internal volume (12) and located vertically above the collecting tray (8), the drainage orifice (14) being configured to allow gravitational flow of cooking juices from the internal volume (12) into the collecting tray (8) regardless of the position the cooking plate (3) occupies, **characterized in that** the cooking appliance (1) further includes a fixed separation element (17) disposed between the collecting tray (8) and the cooking plate (3) when the cooking plate (3) is in the first plate position, the separation element (17) comprising a passage slot (18) configured to allow gravitational flow of cooking juices from the drainage orifice (14) towards the collecting tray (8) regardless of the position occupied by the cooking plate (3).

2. Cooking appliance (1) according to claim 1, wherein the bottom part (10) of the cooking plate (3) comprises at least one inclined guiding surface (15) configured to direct and orient cooking juices contained in the internal volume (12) towards the drainage orifice (14).

3. Cooking appliance (1) according to claim 1 or 2, wherein the drainage orifice (14) is provided on a peripheral wall (11) of the cooking plate (3) that extends substantially parallel to the direction of movement (A1).

4. Cooking appliance (1) according to any one of claims 1 to 3, wherein the cooking plate (3) comprises support ribs (13) provided on the bottom part (10) and configured to support food arranged on the cooking plate (3).

5. Cooking appliance (1) according to the preceding claim, wherein the support ribs (13) delimit flow channels of cooking juices configured to guide and orient at least a portion of cooking juices contained in the internal volume (12) towards the drainage orifice (14).

6. Cooking appliance (1) according to claim 5 in combination with claim 3, wherein the cooking juice flow channels are configured to guide and orient cooking juices contained in the internal volume (12) towards the peripheral wall (11) of the cooking plate (3) provided with the drainage orifice (14).

7. Cooking appliance (1) according to claim 5 or 6, wherein the cooking plate (3) further comprises a lateral collecting channel (16) configured to collect cooking juices flowing in the cooking juice flow channels and to guide and orient said cooking juices towards the drainage orifice (14).

8. Cooking appliance (1) according to the preceding claim, wherein each cooking juice flow channel comprises a bottom wall provided with an inclined guiding surface (15) configured to guide and orient cooking juices contained within said cooking juice flow channel towards the lateral collecting channel (16).

9. Cooking appliance (1) according to claim 7 or 8, wherein the lateral collecting channel (16) comprises a bottom wall that is inclined and configured to guide and orient cooking juices contained in the lateral collecting channel (16) towards the drainage orifice (14).

10. Cooking appliance (1) according to any one of claims 1 to 9, wherein the direction of movement (A1) is substantially horizontal when the cooking appliance (1) rests on a surface that is horizontal.

11. Cooking appliance (1) according to any one of claims 1 to 10, wherein the cooking chamber (2) comprises an access opening (6), and the cooking appliance (1) comprises a door (5) movable between a closed position, in which the door (5) closes the access opening (6) and prevents access to the cooking plate (3), and an open position, in which the door (5) frees the access opening (6) and allows movement of the cooking plate (3) between the first plate position and the second plate position.

12. Cooking appliance (1) according to any one of the preceding claims, wherein the passage slot (18) extends in an extension direction substantially parallel to the direction of movement (A1), such that the drainage orifice (14) is located vertically above the passage slot (18) regardless of the position occupied by the cooking plate (3).

13. Cooking appliance (1) according to any one of the preceding claims, wherein the separation element (17) delimits a recovery volume (19) configured to collect at least part of the condensates flowing on internal walls (20) of the cooking chamber (2).

14. Cooking appliance (1) according to the preceding claim, wherein the recovery volume (19) comprises a bottom wall extending at least in part facing the collecting tray (8), the bottom wall having a drainage orifice (22) configured to allow gravitational flow of condensates contained in the recovery volume (19) into the collecting tray (8).

15. Cooking appliance (1) according to any one of the preceding claims, wherein the cooking chamber (2) comprises two deflection elements (23) provided respectively on two lateral walls (24) of the cooking chamber (2), each deflection element (23) being configured to extend at least in part above the cooking plate (3) and to guide and direct condensates flowing on the respective lateral wall of the cooking chamber (2) towards the cooking plate (3).

16. Cooking appliance (1) according to the preceding claim, wherein the cooking plate (3) further comprises two lateral flanges (26) extending substantially parallel to the direction of movement (A1), each deflection element (23) being configured to extend at least in part above a respective lateral flange (26) and to allow gravitational flow of condensates, flowing on said deflection element (23), onto the respective lateral flange (26).
